# EUROPÄISCHE PATENTANMELDUNG

(11) **EP 3 511 184 A1**
(43) Veröffentlichungstag der Anmeldung: **17.07.2019**
(21) Anmeldenummer: 18151638.6
(22) Anmeldetag: 15.01.2018
(51) Int. Cl.: B60K 1/04

(54) **KRAFTFAHRZEUG MIT TRÄGERSTRUKTUR**

(71) Anmelder: MAGNA STEYR Fahrzeugtechnik AG & Co KG, 8041 Graz (AT)
(72) Erfinder: HOFER, Bernhard, 8053 Graz (AT)
(74) Vertreter: Zangger, Bernd

(57) **Zusammenfassung**

Ein Kraftfahrzeug umfassend eine Karosserie (1), wobei die Karosserie (1) eine Trägerstruktur (2) umfasst, wobei das Kraftfahrzeug ferner eine Hochvoltbatterie umfasst, wobei die Hochvoltbatterie ein Batteriegehäuse (3) und mindestens ein Batteriemodul (4) im Batteriegehäuse (3) umfasst, wobei das Batteriegehäuse (3) derart an der Trägerstruktur (2) angeordnet und befestigt ist, dass das Batteriegehäuse (3) als Hauptbodenblech wirkt, wobei an der Unterseite des Batteriegehäuses (3) ein abnehmbarer Batteriedeckel (5) angeordnet ist, so dass durch den Batteriedeckel (5) das mindestens eine Batteriemodul (4) zugänglich ist, wobei der Batteriedeckel (5) als Unterfahrschutz wirkt.

## Beschreibung

### Gebiet der Erfindung

Die vorliegende Erfindung betrifft ein Kraftfahrzeug umfassend eine Karosserie, wobei die Karosserie eine Trägerstruktur umfasst.

### Stand der Technik

Es ist bekannt das Kraftfahrzeuge eine Trägerstruktur, insbesondere umfassend Längsträger und Querträger, als Karosserien nutzen können. Die Trägerstruktur kann dann insbesondere eine sogenannte selbsttragende Karosserie des Fahrzeuges bilden.

Üblicherweise verwenden Fahrzeuge eine Bodenplatte bzw. ein Bodenblech, auch als Hauptboden, Hauptbodenplatte, Hauptbodenblech bezeichnet, als Begrenzung des Fahrzeuges nach unten hin. Das Hauptbodenblech hat dann üblicherweise ebenfalls eine tragende Funktion als Karosseriebauteil des Fahrzeuges.

Die Unterseite eines solchen Hauptbodenbleches kann auch als Unterfahrschutz wirken, der das Fahrzeug von Verunreinigungen von unterhalb des Fahrzeuges schützt.

In jüngerer Zeit werden zunehmend Hochvoltbatterien als Antriebsbatterien für Elektro- und Hybridfahrzeuge verwendet. Diese Hochvoltbatterien sind üblicherweise relativ groß und müssen daher platzsparend in einem Fahrzeug angeordnet werden.

### Zusammenfassung der Erfindung

Es ist eine Aufgabe der Erfindung, ein Kraftfahrzeug anzugeben, das Bauraum und Bauteile einspart und daher kompakt und kostengünstig hergestellt werden kann. Insbesondere soll eine Hochvoltbatterie bauraumsparend angeordnet werden und dabei wartungsfreundlich bleiben.

Die Lösung der Aufgabe erfolgt durch ein Kraftfahrzeug nach Anspruch 1.

Erfindungsgemäß umfasst ein Kraftfahrzeug eine Karosserie, wobei die Karosserie eine Trägerstruktur umfasst. Diese Trägerstruktur bzw. diese Karosserie umfasst kein übliches Hauptbodenblech.

Das Kraftfahrzeug umfasst ferner eine Hochvoltbatterie, wobei die Hochvoltbatterie ein Batteriegehäuse und mindestens ein Batteriemodul im Batteriegehäuse umfasst.

Das Batteriegehäuse ist derart an der Trägerstruktur angeordnet und befestigt, dass das Batteriegehäuse selbst als Hauptbodenblech wirkt. Das Batteriegehäuse bildet also einen Boden des Kraftfahrzeuges. Ein davon unabhängiges Hauptbodenblech weist das Kraftfahrzeug nicht auf, so dass auch keine Freiräume zwischen Batteriegehäuse und Hauptboden bestehen.

Das Batteriegehäuse hat im Wesentlichen die Form einer Platte bzw. eines flachen Quaders, um den Hauptboden ersetzen zu können. Die Hochvoltbatterie ist daher ein Flachspeicher.

An der Unterseite des Batteriegehäuses ist ein abnehmbarer Batteriedeckel angeordnet, so dass durch den Batteriedeckel das mindestens eine Batteriemodul zugänglich ist, insbesondere für Wartungs- und Reparaturzwecke.

"Abnehmbar" kann dabei ein vollständiges Entfernen des Batteriedeckels bedeuten, oder auch ein Aufschwenken oder Aufklappen des Batteriedeckels, so dass jedenfalls der Zugang zu den Batteriemodulen möglich wird.

Da der Batteriedeckel die Unterseite des somit gebildeten "Hauptbodens" darstellt, wirkt der Batteriedeckel auch als Unterfahrschutz, der die Batteriemodule vor Beschädigungen und Verschmutzungen schützt.

Erfindungsgemäß wird somit eine Hochvoltbatterie äußerst platzsparend in einem Fahrzeug angeordnet. Das Batteriegehäuse übernimmt zudem eine lasttragende Funktion als Karosseriebauteil des Fahrzeuges. Dabei bleiben Batteriemodule und Elektronik innerhalb des Batteriegehäuses von außen gut zugänglich für Austausch, Reparatur etc.

Vorzugsweise umfasst die Trägerstruktur mindestens einen Sitzquerträger und/oder Hintersitzquerträger und/oder eine Tunnellängsstruktur.

Das Batteriegehäuse ist an der Trägerstruktur bevorzugt mittels Schrauben, Nieten und/oder Montageklebstoff dauerhaft und lasttragend befestigt. Das Batteriegehäuse bleibt bevorzugt auf Lebenszeit des Fahrzeuges mit dessen Trägerstruktur verbunden, da es einen Teil des Lastpfades übernimmt.

Bevorzugt sind die Trägerstruktur und das Batteriegehäuse separat voneinander tauchlackiert. Die Hochvoltbatterie kann separat von der Karosserie des Fahrzeuges und parallel also gleichzeitig zu dieser lackiert und zusammengebaut werden, inklusive Batteriemodulen, Elektronik und erforderlicher Verbindungskabel. Das Batteriegehäuse besteht bevorzugt aus Metall. Die Beschichtung durch Tauchlackierung kann dem Korrosionsschutz dienen, sowie die Haftung eines Klebstoffes am Batteriegehäuse verbessern. Das Batteriegehäuse kann mittels Montageklebstoff und Schrauben oder Nieten an der Trägerstruktur befestigt sein. Die Verschraubung kann beispielsweise von unten durch den ganzen Querschnitt der Hochvoltbatterie erfolgen oder von oben.

Vorzugsweise ist mindestens ein Batteriemodul am Batteriedeckel montiert ist und/oder mindestens ein Batteriemodul an der oberen Wand des Batteriegehäuses und/oder mindestens ein Batteriemodul an einer seitlichen Wand des Batteriegehäuses befestigt ist.

Der abnehmbare Batteriedeckel kann Teile der Seitenwände oder die ganzen Seitenwände des Batteriegehäuses umfassen, also des Rahmens des Batteriegehäuses, wobei jedoch die restliche Struktur des Batteriegehäuses genügend Steifigkeit aufweisen muss, dass es bei Abnahme, insbesondere Aufschwenken oder Aufklappen, des Batteriedeckels nicht zu Verformungen des Fahrzeuges kommt.

Der Batteriedeckel ist bevorzugt mittels Schrauben am restlichen Batteriegehäuse und/oder an der Trägerstruktur abnehmbar befestigt, insbesondere gasdicht. Wenn der Batteriedeckel direkt an der Trägerstruktur verschraubt ist, kann er die Steifigkeit und das Crashverhalten der Karosserie besonders verbessern.

Die Begriffe "oben" und "unten" beziehen sich in dieser Schrift immer auf ein Kraftfahrzeug in üblicher Gebrauchslage.

### Kurzbeschreibung der Zeichnungen

Die Erfindung wird im Folgenden beispielhaft unter Bezugnahme auf die Zeichnungen beschrieben.
- Fig. 1: ist eine dreidimensionale Darstellung der Karosserie und der Hochvoltbatterie eines erfindungsgemäßen Kraftfahrzeuges.
- Fig. 2: sind dreidimensionale Darstellungen die die Hochvoltbatterie in die Karosserie, gemäß Figur 1, eingesetzt zeigen, in der oberen Figur von oben gesehen in der unteren Figur von unten gesehen.
- Fig. 3: zeigt Karosserie und Hochvoltbatterie im zusammengesetzten Zustand und entspricht Fig. 2 unten.
- Fig. 4: zeigt Karosserie und Hochvoltbatterie entsprechend Fig. 3, jedoch mit abgenommenem Batteriedeckel.
- Fig. 5: zeigt ein gesamtes erfindungsgemäßes Kraftfahrzeug und dessen Batteriemodule.
- Fig. 5a, 5b, 5c: zeigen Varianten der Befestigung der Batteriemodule.
- Fig. 6: zeigt schematisch die Reparatur eines erfindungsgemäßen Kraftfahrzeuges.

### Detaillierte Beschreibung der Erfindung

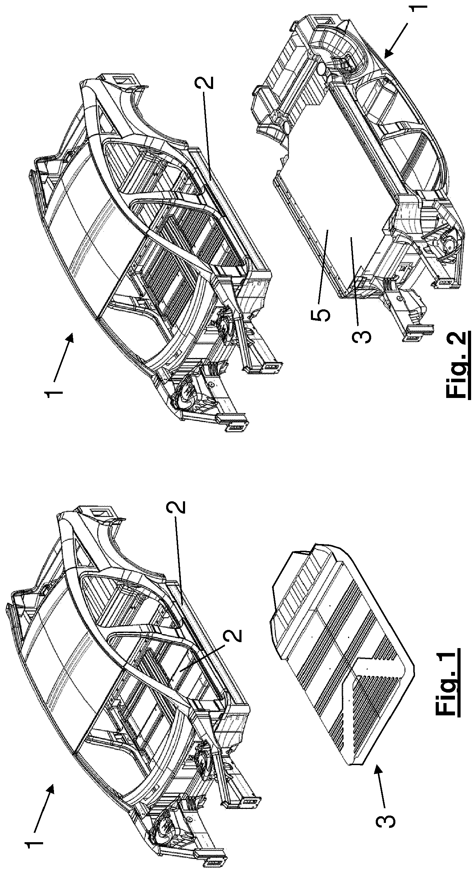

In den Fig. 1-4 ist eine Karosserie 1 und eine Hochvoltbatterie mit Batteriegehäuse 3 eines erfindungsgemäßen Kraftfahrzeuges dargestellt.

Die Karosserie 1 umfasst eine Trägerstruktur 2, die mehrere Längsträger, sowie Sitzquerträger und Hintersitzquerträger umfasst, sowie eine Tunnellängsstruktur umfasst. Die Karosserie 1 umfasst auch Blechbauteile die ein Dach des Kraftfahrzeuges bilden, sowie Säulen die die Dachbleche mit der Trägerstruktur 2 verbinden. Die Karosserie umfasst an sich kein Hauptbodenblech.

Das Kraftfahrzeug umfasst ferner eine Hochvoltbatterie in einem Batteriegehäuse 3 und mehrere Batteriemodule 4 im Batteriegehäuse 3.

Die Hochvoltbatterie ist ein Flachspeicher.

Das Batteriegehäuse 3 ist derart an der Trägerstruktur 2 angeordnet und an der Trägerstruktur 2 befestigt, dass das Batteriegehäuse 3 als Hauptbodenblech wirkt. Das Batteriegehäuse 3 bildet also einen Boden des Kraftfahrzeuges.

Das Batteriegehäuse 3 ist an der Trägerstruktur 2 mittels Schrauben oder Nieten und zusätzlich mittels Montageklebstoff dauerhaft und lasttragend befestigt.

Die Trägerstruktur 2 und die Hochvoltbatterie sind unabhängig voneinander in parallelen Linien hergestellt. Das Batteriegehäuse 3 ist separat von der Karosserie 1 des Fahrzeuges tauchlackiert.

An der Unterseite des Batteriegehäuses 3 ist ein abnehmbarer Batteriedeckel 5 angeordnet, so dass durch Abnahme des Batteriedeckels 5 die Batteriemodule 4 zugänglich sind. Der Batteriedeckel 5 wirkt als Unterfahrschutz und schützt die Batteriemodule vor Beschädigungen von unten, also von Seite der Straße.

Die Fig. 2 zeigt die Bauteile aus Fig. 1, nämlich Karosserie 1 und Hochvoltbatterie in zusammengebautem Zustand, wobei in der oberen Figur die Sicht von oben und in der unteren Figur die Sicht von unten dargestellt ist, bzw. ein gewendetes Fahrzeug.

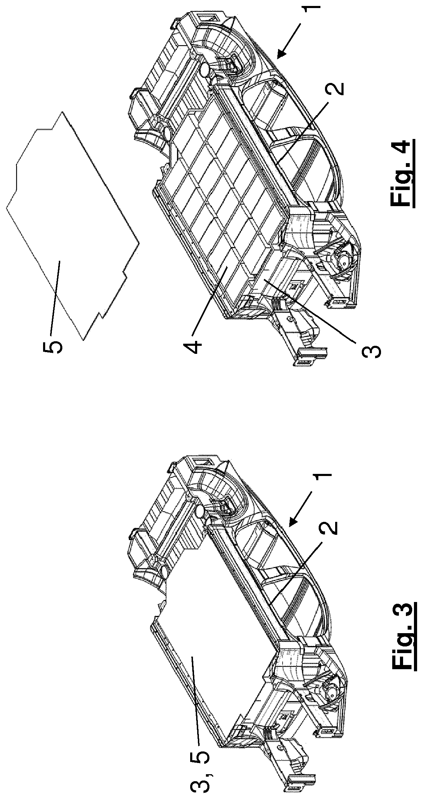

Fig. 4 zeigt im Vergleich zu Fig. 3, die Abnahme des Batteriedeckels 5 vom restlichen Batteriegehäuse 3. Zwischen Batteriedeckel 5 und den übrigen Wänden des Batteriegehäuses 3 sind die Batteriemodule zweidimensional, in Längs- und Querrichtung, regelmäßig verteilt angeordnet und befestigt.

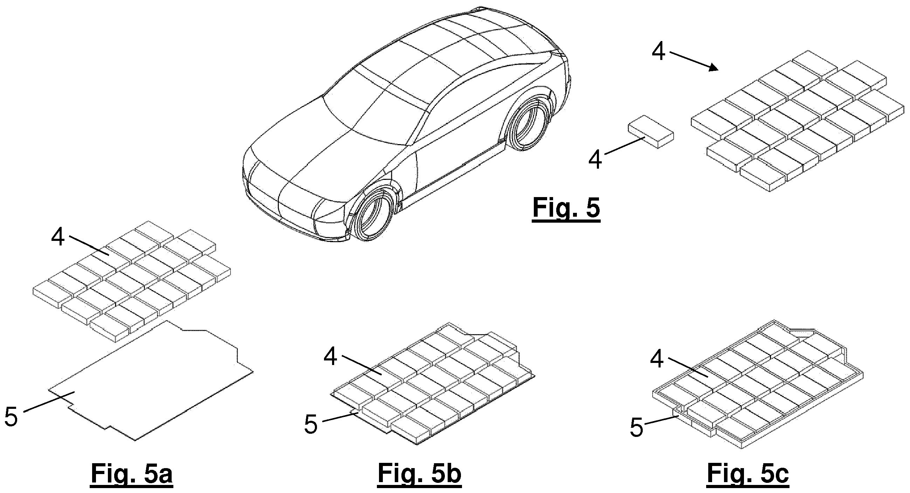

Fig. 5 zeigt die Batteriemodule 4, die in dem dargestellten Kraftfahrzeug montiert werden. Die Befestigung der Batteriemodule 4 kann unter anderem in den Varianten der Fig. 5a, b, und c erfolgen. Dabei sind zum Zeitpunkt der Befestigung des Batteriedeckels 5 am übrigen Batteriegehäuse 3 und/oder an der Trägerstruktur 2 im Rahmen der Fahrzeugfertigung die Batteriemodule 4 noch nicht montiert (Fig. 5a) oder bereits vormontiert auf dem Batteriedeckel 5 (Fig 5b) oder bereits vormontiert auf dem Batteriedeckel 5 der auch einen Rahmen, also Seitenwände des Batteriegehäuses 3 umfasst. Die Batteriemodule 4 können auf diese Weise (Fig. 5b) oder auch an anderen Wänden des Batteriegehäuses 3, zum Zeitpunkt der Befestigung des Batteriedeckels 5, bereits im oder am Batteriegehäuse 3 vormontiert sein.

Die zur Fig. 5a beschriebene Ausführung, dass die Batteriemodule 4 zum Zeitpunkt der Befestigung des Batteriedeckels 5 noch nicht montiert sind, ist vor allem dann vorteilhaft, wenn das Befestigen des Batteriedeckels 5 am übrigen Batteriegehäuse 3 noch nicht ein Schließen des Batteriedeckels umfasst, sondern ein Verbinden des Deckels mit dem Batteriegehäuse darstellt, beispielsweise mittels Scharnieren oder ähnlichen Mechaniken, so dass der Batteriedeckel noch einfach auf- und zugeklappt oder auf sonstige Weise einfach geöffnet werden kann oder sogar nach dem Befestigen noch offen ist.

Nach dem Befestigen des Batteriedeckels kann optional, je nach Ausführungsvariante, noch ein zusätzlicher Vorgang des Verschließens der Batterie mittels Schließen des Batteriedeckels 5, beispielsweise in Verbindung mit einem anschließenden Verriegeln oder Verschrauben des Batteriedeckels 5 am übrigen Batteriegehäuse 3 und / oder an der Tragstruktur 2, erfolgen.

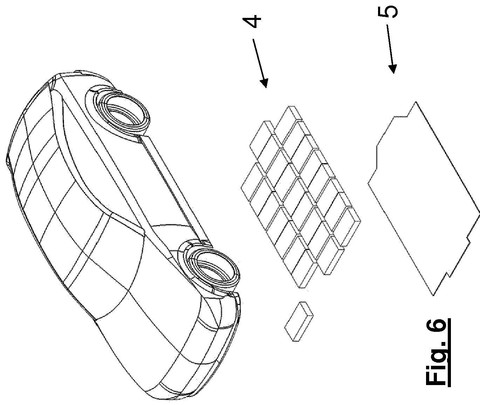

Schließlich ist in Fig. 6 schematisch dargestellt, wie eine Reparatur oder Wartung eines erfindungsgemäßen Kraftfahrzeuges erfolgen kann, nämlich durch Abnahme des Batteriedeckels 5, so dass die Batteriemodule 4 entfernt und repariert bzw. getauscht werden können.

### Bezugszeichenliste

- 1: Karosserie
- 2: Trägerstruktur
- 3: Batteriegehäuse
- 4: Batteriemodul
- 5: Batteriedeckel

## Patentansprüche

1. Kraftfahrzeug umfassend eine Karosserie (1), wobei die Karosserie (1) eine Trägerstruktur (2) umfasst, wobei das Kraftfahrzeug ferner eine Hochvoltbatterie umfasst, wobei die Hochvoltbatterie ein Batteriegehäuse (3) und mindestens ein Batteriemodul (4) im Batteriegehäuse (3) umfasst,
**dadurch gekennzeichnet, dass** das Batteriegehäuse (3) derart an der Trägerstruktur (2) angeordnet und befestigt ist, dass das Batteriegehäuse (3) als Hauptbodenblech wirkt, wobei an der Unterseite des Batteriegehäuses (3) ein abnehmbarer-Batteriedeckel (5) angeordnet ist, so dass durch den Batteriedeckel (5) das mindestens eine Batteriemodul (4) zugänglich ist, wobei der Batteriedeckel (5) als Unterfahrschutz wirkt.

2. Kraftfahrzeug nach Anspruch 1,
**dadurch gekennzeichnet, dass** die Trägerstruktur (2) mindestens einen Sitzquerträger und/oder Hintersitzquerträger und/oder eine Tunnellängsstruktur umfasst.

3. Kraftfahrzeug nach zumindest einem der vorhergehenden Ansprüche,
**dadurch gekennzeichnet, dass** das Batteriegehäuse (3) an der Trägerstruktur (2) mittels Schrauben, Nieten und/oder Montageklebstoff dauerhaft und lasttragend befestigt ist.

4. Kraftfahrzeug nach zumindest einem der vorhergehenden Ansprüche,
**dadurch gekennzeichnet, dass** die Trägerstruktur (2) und das Batteriegehäuse (3) separat voneinander tauchlackiert sind.

5. Kraftfahrzeug nach zumindest einem der vorhergehenden Ansprüche,
**dadurch gekennzeichnet, dass** mindestens ein Batteriemodul (4) am Batteriedeckel (5) montiert ist und/oder mindestens ein Batteriemodul (4) an der oberen Wand des Batteriegehäuses (3) und/oder mindestens ein Batteriemodul (4) an einer seitlichen Wand des Batteriegehäuses (3) befestigt ist.

6. Kraftfahrzeug nach zumindest einem der vorhergehenden Ansprüche,
**dadurch gekennzeichnet, dass** der Batteriedeckel (5) mittels Schrauben am restlichen Batteriegehäuse (3) und/oder an der Trägerstruktur (2) abnehmbar befestigt ist, insbesondere gasdicht.

7. Kraftfahrzeug nach zumindest einem der vorhergehenden Ansprüche,
**dadurch gekennzeichnet, dass** die Karosserie (1) kein Hauptbodenblech umfasst, abgesehen von dem Batteriegehäuse (3) welches als Hauptbodenblech wirkt.
